# EUROPEAN PATENT SPECIFICATION

(11) **EP 4 605 154 B1**
(45) Date of publication and mention of the grant of the patent: **22.07.2026**
(21) Application number: 23802124.0
(22) Date of filing: 20.10.2023
(51) Int. Cl.: B21F 33/00, B22F 3/00, B23P 15/26, F28D 15/04, G21C 15/257

(54) **MANUFACTURE OF HEAT PIPE WICKS UTILIZING IN-SITU ROLLING AND HYDROFORMING DEVICE**
HERSTELLUNG VON WÄRMEROHRDOCHTEN MIT IN-SITU-ROLL- UND HYDROFORMVORRICHTUNG
FABRICATION DE MÈCHES DE CALODUC UTILISANT UN DISPOSITIF DE LAMINAGE ET D'HYDROFORMAGE IN SITU

(30) Priority: 20.10.2022 US 202263380329 P
(43) Date of publication of application: 27.08.2025
(73) Proprietor: Westinghouse Electric Company LLC, Cranberry Township, PA 16066 (US)
(72) Inventor: LAPRESTI, Michael A., Greensburg, Pennsylvania 15601 (US); LOJEK III, John, Latrobe, Pennsylvania 15650 (US); BLUNT, Rory A.F., Pittsburgh, Pennsylvania 15206 (US); NESTOR, Christopher M., Murrysville, Pennsylvania 15632 (US); BRUNER, Brandon H., Prospect, Pennsylvania 16052 (US); GROSS, David M., Gibsonia, Pennsylvania 15044 (US)
(74) Representative: Novagraaf Group
(86) International application number: PCT/US2023/077394
(87) International publication number: WO 2024/086779

(56) References cited:
- WO-A1-2021/167871
- WO-A1-2021/216446
- JP-A- 2014 057 938
- JP-A- S6 062 596
- SU-A1- 1 611 678
- US-A- 3 291 700
- US-A- 3 921 710
- US-A1- 2007 034 357

## Description

### CROSS-REFERENCE TO RELATED APPLICATION

This application claims the benefit of and priority under 35 U.S.C. § 119(e) to U.S. Patent Application Serial No. 63/380,329 filed October 20, 2022, entitled "MANUFACTURE OF HEAT PIPE WICKS UTILIZING IN-SITU ROLLING AND HYDROFORMING DEVICE".

### BACKGROUND

This invention relates generally to heat pipes used in heat transfer systems, and more particularly, to wicks within the heat pipes that are configured to transfer the working fluid of the heat pipe from a condenser region of the heat pipe to an evaporator region.

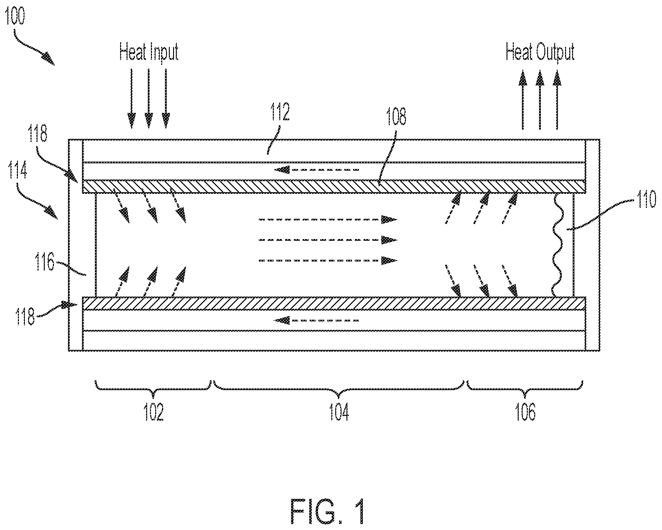

A heat pipe is a hermetically sealed, two-phase heat transfer component used to transfer heat from a primary side (evaporator section) to a secondary side (condenser section). FIG. 1, as an example, illustrates a heat pipe 100 comprising the aforementioned evaporator section 102 and condenser section 106, along with an adiabatic section 104 extending therebetween. The heat pipe 100 further includes a working fluid (such as water, liquid potassium, sodium, or alkali metal) and a wick 108. In operation, the working fluid is configured to absorb heat in the evaporator section 102 and vaporize. The saturated vapor, carrying latent heat of vaporization, flows towards the condenser section 106 through the adiabatic section 104. In the condenser section 106, the vapor condenses into a liquid pool 110 and gives off its latent heat. The condensed liquid is then returned to the evaporator section 102 through the wick 108 by capillary action. The aforementioned flow path of the working fluid is illustrated by segmented arrows in FIG. 1. The phase change processes and two-phase flow circulation continues as long as the temperature gradient between the evaporator and condenser sections is maintained. Due to the very high heat transfer coefficients for boiling and condensation, heat pipes are highly effective thermal conductors.

In nuclear systems, heat pipes are utilized by placing the evaporator section of the heat pipe within the reactor core containing nuclear fuel and the condenser section is placed near heat exchangers. The nuclear fuel vaporizes the working fluid and heat exchangers absorb the latent heat at the condenser section. Example heat pipes in nuclear applications are described in U.S. Patent No. 5,684,848, U.S. Patent No. 6,768,781, and U.S. Patent Application Publication No. 2016/0027536.

Another example use for heat pipes in nuclear systems is with micro-reactors, which are nuclear reactors that generate less than 10MWe and are capable of being deployed for remote applications. These micro-reactors can be packaged in relatively small containers, operate without active involvement of personnel, and operate without refueling/replacement for a longer period than conventional nuclear power plants. One such micro-reactor is the eVinci Micro Reactor system, designed by Westinghouse Electric Company. The eVinci system is a heat pipe cooled reactor power system that utilizes heat pipes to act as passive heat removal devices that efficiently move thermal energy out of the reactor core to heat exchangers.

The heat pipes used in the micro-reactors experience extreme operating temperatures (>850°C) and requires an internal wick that is made from materials that can withstand these temperatures and are compatible with the working fluid. This wick can be constructed from a wire mesh that is rolled and diffusion bonded together into a tubelike structure. The wick tube allows for the working fluid within the heat pipe to pass through it radially (such as after the latent heat is given off and the working fluid is absorbed by the wick) and along its axis (transferring the working fluid back toward the evaporator section with capillary action) while remaining rigid.

Manufacturing a wick for insertion into a heat pipe requires a highly complex and detailed process. At a very high level, a wick is manufactured by rolling a sheet of woven wick mesh material into a desired shape, compressing materials (such as tubing) into the wick to forcefully deform the wick into the desired shape, diffusion bonding the mesh together in an oven at vacuum levels while maintaining the wick in a compressed state, and then removing materials used to hold the wick in the compressed state during diffusion bonding. An example of this method for wick forming method are described in U.S. Patent No. 3,964,902, titled "METHOD OF FORMING A WICK FOR A HEAT PIPE.

As described above, the current method of forming a wick requires that materials used to hold the wick in the compressed state need to be removed after the diffusion bonding process need to be removed. U.S. Patent No. 3,964,902, as an example, describes how copper inner and outer mandrels are used to compress the wick and then, after diffusion bonding, the inner and outer mandrel need to be chemically removed through a chemical etching technique. Exposing the wick to this chemical etching process, however, introduces impurities into the wick and diminishes the wicks ability to perform its intended function. The chemical etching technique also results in an increased time and cost associated with producing wicks. Additional reference is made to the published patent document, JP S6062596, on which the preamble of claim 1 is based, and which discloses a system and method for repairing a heat pipe using wick rolling techniques in the heat pipe.

It is the goal of the present disclosure to provide an assembly and method for rolling and forming wicks in a single device, thereby eliminating the need to move a rolled wick between a rolling and forming device, thus lowering the cost and time required to manufacture wicks over other publically documented methods.

### SUMMARY

According to a first aspect, an in-situ wick rolling and forming assembly configured to roll and form a wick for a heat pipe from a wick mesh is disclosed. The in-situ wick rolling and forming assembly includes a first forming shell, a slotted mandrel, and an expandable member. The first forming shell is configured to form the wick in-situ after the rolling of the wick mesh. The first forming shell includes a first recess and a first parting surface. A first central axis of the first recess is positioned below the first parting surface. The slotted mandrel is removably positionable in the first recess. The slotted mandrel includes a first end, a second end, an elongate body, and a slot. The elongate body is intermediate the first end and the second end, and the elongate body defines a longitudinal axis. The slot extends along the longitudinal axis and is configured to receive a leading edge of the wick mesh. The expandable member is fluidically expandable to an expanded configuration. The expandable member is removably positionable inside the slotted mandrel. The expandable member is configured to contact the leading edge of the wick mesh in the expanded configuration such that the leading edge of the wick mesh is gripped between the slotted mandrel and the expandable member. The slotted mandrel is rotatable about the longitudinal axis relative to the first recess to wrap the wick mesh around an outer surface of the slotted mandrel.

According to a second aspect, a method for in-situ wick rolling and forming a wick for a heat pipe from a wick mesh is disclosed. The method includes passing the wick mesh through a tensioner toward a first forming shell of an in-situ wick rolling and forming assembly, positioning a slotted mandrel of the in-situ wick rolling and forming assembly in a first recess of the first forming shell, gripping a leading edge of the wick mesh between the slotted mandrel and an expandable member positioned inside the slotted mandrel, rotating the slotted mandrel multiple full rotations relative to the first forming shell about a longitudinal axis defined through the slotted mandrel to form a rolled wick mesh, deflating the expandable member to release the leading edge of the wick mesh, removing the slotted mandrel and the expandable member from first forming shell, positioning an expandable tube inside the rolled wick mesh in-situ, securing a second forming shell against the first forming shell, and expanding the expandable tube to permanently deform the rolled wick mesh against inside surfaces of the first forming shell and the second forming shell.

### BRIEF DESCRIPTION OF THE DRAWINGS

Various features of the embodiments described herein, together with advantages thereof, may be understood in accordance with the following description taken in conjunction with the accompanying drawings as follows:
FIG. 1 illustrates working fluid moving through a heat pipe.
FIG. 2 illustrates a rolling assembly, according to at least one aspect of the present disclosure.
FIG. 3 illustrates a front view of the slotted mandrel, according to at least one aspect of the present disclosure.
FIG. 4 illustrates a front view of the first forming shell, according to at least one aspect of the present disclosure.
FIG. 5 illustrates a front view of the second forming shell, according to at least one aspect of the present disclosure.
FIG. 6 illustrates a forming assembly, according to at least one aspect of the present disclosure.
FIG. 7 illustrates an exploded view of the forming assembly of FIG. 6, according to at least one aspect of the present disclosure.

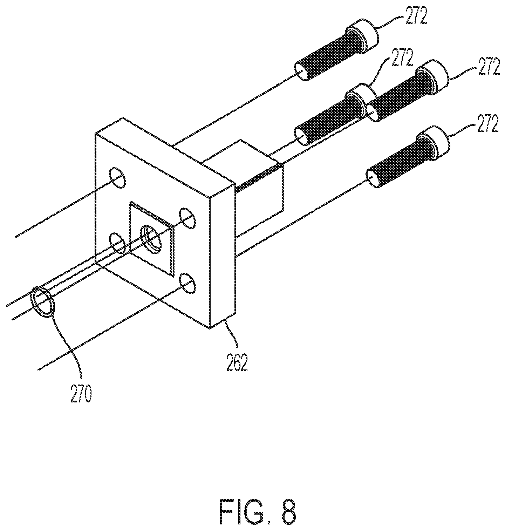

FIG. 8 illustrates a zoomed in view of an end flange, fasteners, and an o-ring of the forming assembly of FIG. 7, according to at least one aspect of the present disclosure.
FIG. 9 illustrates a zoomed in view of an expandable tube, and a wick mesh of the forming assembly of FIG. 7, according to at least one aspect of the present disclosure.
FIG. 10 illustrates a first end flange of the forming assembly of FIG. 6, according to at least one aspect of the present disclosure.
FIG. 11 illustrates a cross-sectional view of the first end flange of FIG. 10, according to at least one aspect of the present disclosure.

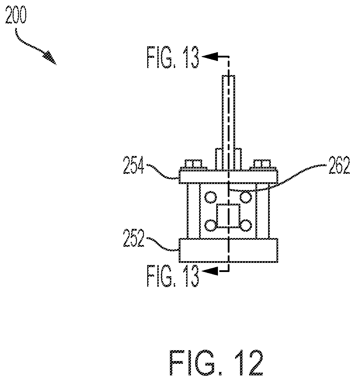

FIG. 12 illustrates a front view of the forming assembly of FIG. 6, according to at least one aspect of the present disclosure.

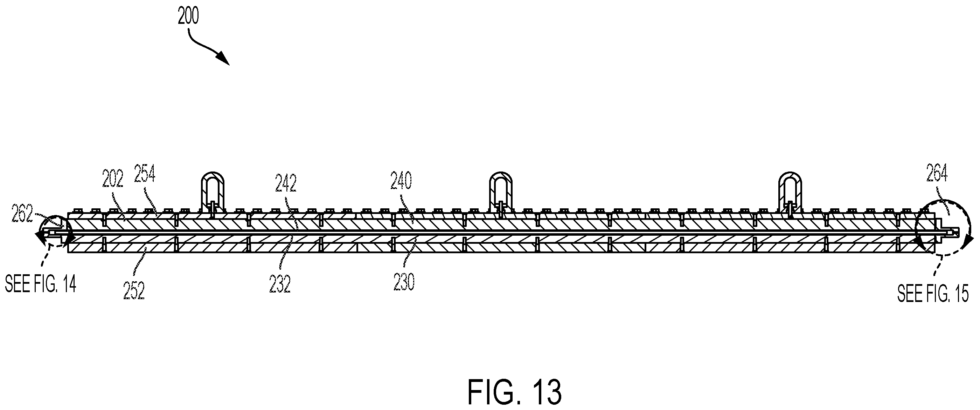

FIG. 13 illustrates a cross-sectional view of the forming assembly of FIG. 12, according to at least one aspect of the present disclosure.
FIG. 14 illustrates a detailed view of the expandable tube and wick mesh inserted within a receiving area of the first end flange, according to at least one aspect of the present disclosure.
FIG. 15 illustrates a detailed view of the expandable tube and wick mesh inserted within a receiving area of the second end flange, according to at least one aspect of the present disclosure.
FIG. 16 illustrates a method of a method for in-situ wick rolling and forming a wick for a heat pipe from a wick mesh, according to at least one aspect of the present disclosure.
FIG. 17 illustrates a tensioner, according to at least one aspect of the present disclosure.

Corresponding reference characters indicate corresponding parts throughout the several views. The exemplifications set out herein illustrate various embodiments of the invention, in one form, and such exemplifications are not to be construed as limiting the scope of the invention in any manner.

### DETAILED DESCRIPTION

Numerous specific details are set forth to provide a thorough understanding of the overall structure, function, manufacture, and use of the embodiments as described in the specification and illustrated in the accompanying drawings. Well-known operations, components, and elements have not been described in detail so as not to obscure the embodiments described in the specification. The reader will understand that the embodiments described and illustrated herein are non-limiting examples, and thus it can be appreciated that the specific structural and functional details disclosed herein may be representative and illustrative. Variations and changes thereto may be made without departing from the scope of the claims.

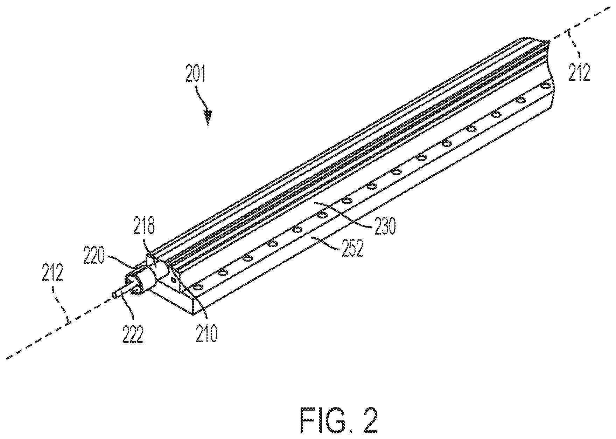

FIG. 2 illustrates a rolling assembly 201 for rolling a wick 108, according to at least one aspect of the present disclosure. A sheet, or plurality of sheets, of wick mesh 204 are configured to be tightly rolled or wrapped into a predetermined shape about a slotted mandrel 210. In at least one example, the slotted mandrel 210 is comprised of stainless steel.

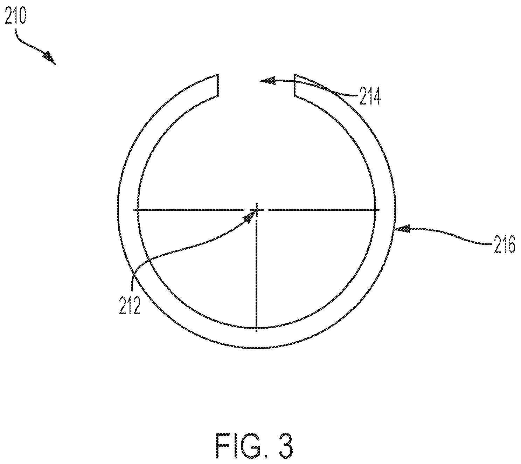

Further to the above, the wick rolling assembly 201 includes the slotted mandrel 210 that is configured to be placed in, and later be removed from, the first recess 232 of the lower, or first, forming shell 230. As shown in FIG. 3, the slotted mandrel 210 can be a tube which has a slot 214 running axially 212 along its length. The slot 214 is configured to receive the leading edge of the wick mesh 204. Thus, the sheet of wick mesh 204, which can be cut to size prior to rolling, can be rolled into position around the slotted mandrel 210 prior to being formed into the final wick shape. Because the slotted mandrel 210 is used to roll the wick 108, the outer diameter of the slotted mandrel 210 will define the inner diameter of the rolled wick 108 prior to the forming process. The wick mesh 204 is rolled to the desired outside diameter with the corresponding number of mesh wraps defining the thickness of the rolled wick.

Referring again to FIG. 2, the inner diameter of the slotted mandrel 210 is configured to receive an expandable member 222. The expandable member 222 should be longer than the lower forming shell 230 and the slotted mandrel 210 in length such that it will extend out of the mandrel end 218 when installed. In various exemplifications, the expandable member 222 defines an inflatable bladder. The expandable member 222 is able to change from an expanded to a deflated position. When in the deflated, or at least partially deflated, position, the expandable member 222 can be slid into the inner diameter of the slotted mandrel 210 through the mandrel end 218. The expandable member 222 can then be inflated into the expanded position using any suitable fluid such as, but not limited to, air or water. In the expanded position, the expandable member 222 can provide a gripping or clamping force such that when the leading edge of the wire mesh 204 is placed into the slot 214 of the slotted mandrel 210, the leading edge of the wire mesh 204 is tightly gripped between the inner diameter of the slotted mandrel 210 and the outer diameter of the expandable member 222. Depending on the thickness of the wire mesh 204, the expandable member 222 may be inflated to varying pressures to create the requisite gripping strength. The expandable member 222 can be made of any suitable material, such as rubber, as an example. The expandable member 222 material is selected such that it can maintain its shape under consistent pressure during the rolling process, and then be deflated upon release of the pressure. In at least one example, the expandable member 222 comprises a soft rubber tube.

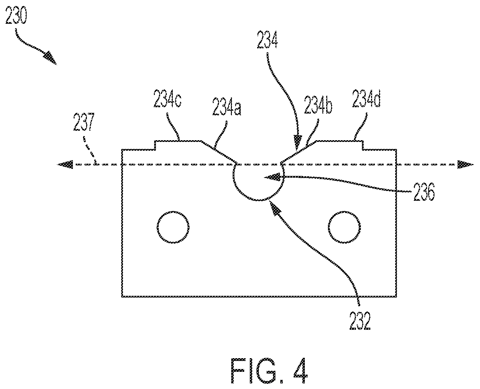

The wick rolling assembly 201 also includes a lower, or first, forming shell 230, which can give the outside form and dimensions of the wick mesh 204 when it is rolled inside the first forming shell 230. As shown in FIG. 4, the first forming shell 230 includes a first cavity, or recess, 232 and a first parting surface 234 extending from ends of the first forming recess 232. The first recess 232 and the first parting surface 234 are defined in the first forming shell 230 and extend along a length thereof. The central axis 236 of the first recess 232 is positioned below the first parting surface 234, such that the first recess 232 of the first forming shell 230 holds the rolled wick mesh 204 in position, or in a rolled state, even after the slotted mandrel 210 has been removed from the rolled wick mesh 204. In the illustrated example, the central axis 236 of the first forming recess 232 is below an axis 237 intersecting the ends of the first recess 232.

The first parting surface 234 of the first forming shell 230 may be flat or angled. In the illustrated example, the first parting surface 234 includes angled portions 234a, 234b extending from the ends of the first recess 232, and flat portions 234c, 234d extending from the angled portions 234a, 234b, respectively, as shown in FIG. 4. In the illustrated example, the angled portions 234a, 234b are angled upwardly away from the first recess 232, and define acute angles with the axis 237. This profile minimizes the number of sharp angles that the wick mesh 204 has to pass over during the wick rolling process, thereby minimizing the number of catch points upon which the wick mesh 204 may be caught and increasing the durability of the first forming shell 230.

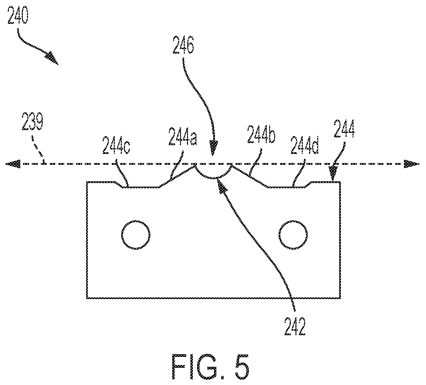

The wick rolling assembly 201 can also include an upper, or second, forming shell 240 that cooperates with the first forming shell 230 to give the outside form and dimensions of the wick mesh 204 in forming process, as described in greater detail below. As shown in FIG. 5, the second forming shell 240 includes a second cavity, or recess, 242 and a second parting surface 244 extending from ends of the second forming recess 242. The second recess 242 and the second parting surface 244 are defined in the second forming shell 240 and extend along a length thereof. The central axis 246 of the second recess 242 is positioned below the first parting surface 234.

The second parting surface 244 of the first forming shell 240 may be flat or angled. In the illustrated example, the second parting surface 244 includes angled portions 244a, 244b extending from the ends of the second recess 242, and flat portions 244c, 244d extending from the angled portions 244a, 244b, respectively, as shown in FIG. 4. In the illustrated example, the angled portions 244a, 244b define acute angles with an axis 239 intersecting ends of the second recess 242.

The profile of the second parting surface 244 compliments that of the first parting surface 234 to permit a tight contact between the shells 230, 240 during the forming process, as described below in greater detail. When the shells 230, 240 are assembled, the recesses 232, 242 cooperatively define a cylindrical surface around the rolled wick mesh. In the illustrated example, the first recess 232 defines about two thirds of the cylindrical surface and the second recess 242 defines about one thirds of the cylindrical surface. In certain examples, the first recess 232 defines a greater portion of the cylindrical surface than the second recess 242.

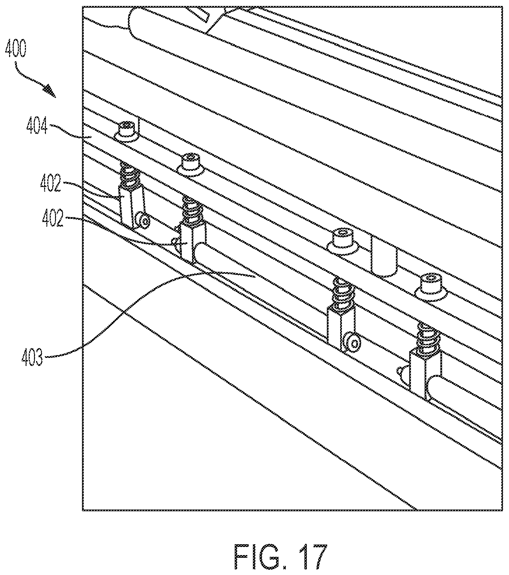

The wick rolling assembly 201 can further include a tensioner 400, as illustrated in FIG. 17. The wick mesh 204 can be fed through the tensioner 400 prior to the leading edge of the wick mesh 204 being inserted into the slotted mandrel 210. The tensioner 400 can include a roller 403 and a bridge 404, such that the bridge 404 can be raised and lowered to insert the wick mesh 204 between the roller 403 and the bridge 404. The bridge 404 can also further include one or more tension members 402 to provide a constant downward force on the wick mesh 204 when the bridge 404 is in the lowered position. The tension members 402 can be, for example, spring-biased toward the roller 403. Thus, the tensioner 400 can hold the wick mesh 204 and provide a backwards force from the rolling direction as the wick mesh 204 is being rolled. This prevents the wick mesh 204 from twisting and being non-uniformly fed into the wick rolling assembly 201. The tensioner 400 can be made of any suitable material such as t-slot extruded aluminum, for example. The tensioner 400 may be spatially separate from the wick rolling assembly 201, or it may be integral to the wick rolling assembly 201.

In further reference to FIG. 2, the slotted mandrel 210 can be slid into the first recess 232 of the lower forming shell 230. Separately, the compression sleeve 220 can be installed onto the mandrel end 218. The mandrel end 218 with the compression sleeve 220 installed can then be installed onto one end of the slotted mandrel 210. The expandable member 222 is then placed inside the slotted mandrel 210 through the mandrel end 218. The wick mesh 204 should be rolled in such a manner to avoid the wick mesh 204 being pinched on the first parting surface 234 of the first forming shell 230. In at least one example, the leading end of the wick mesh 204 is passed over one of the first ends of the first recess 232, and is then inserted into the second end for rolling.

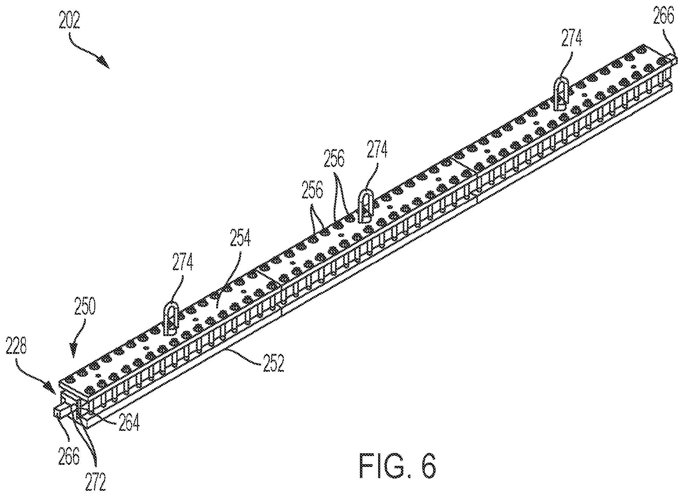

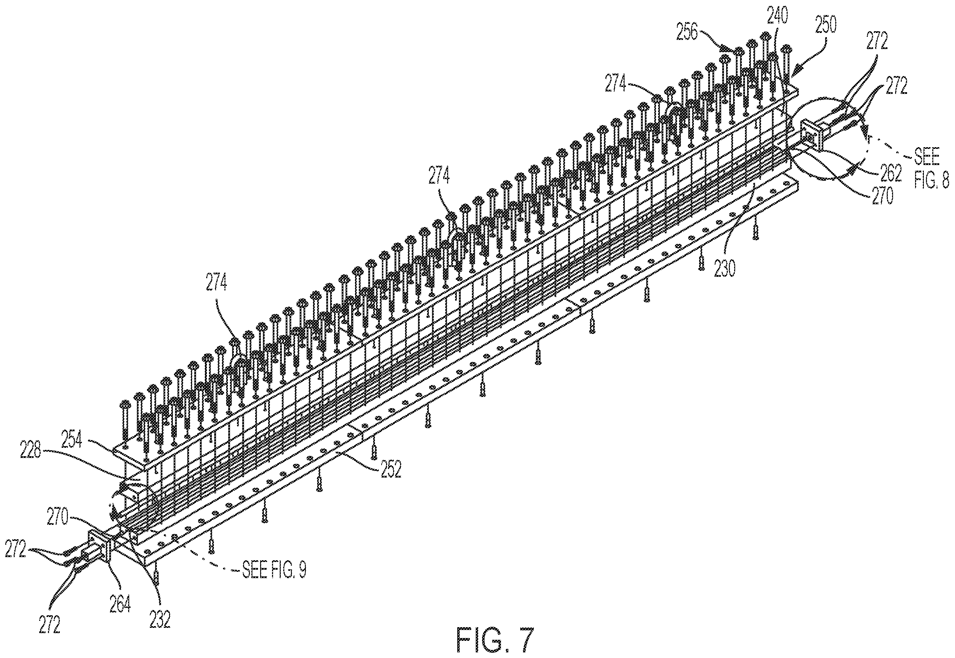

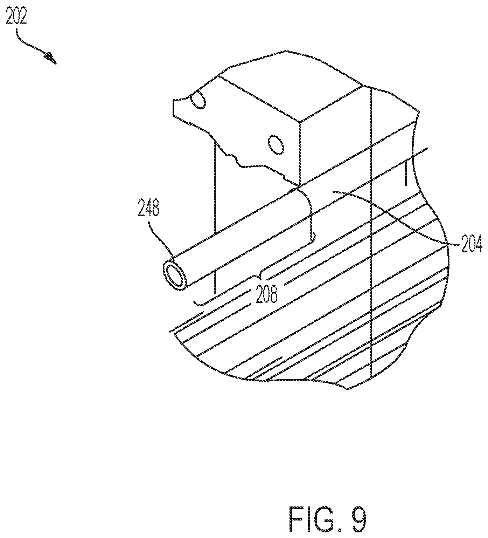

FIG. 6 illustrates a forming assembly 202 for forming a wick, according to at least one aspect of the present disclosure. FIG. 7 illustrates an exploded view of the forming assembly 202. Referring particularly to FIGS. 7 and 9, the forming assembly 202 can include an expandable, or inflatable, tube 248 that is transitionable between an unexpanded, or deflated, configuration and a hydraulically expanded, or inflated, configuration. The expandable tube 248 can be fabricated out of any suitable material, such as polyurethane, as an example. The expandable tube 248 material is selected such that when the wick mesh 204 is formed into a wick, as will be explained in more detail below, the expandable tube 248 will not substantially adhere, attach, or leave substantial trace material on the wick to a degree that compromises the wick's composition, structural integrity, and/or shape.

The examples provided in connection with FIGS. 6 and 7 are designed to yield a tubular wick by utilizing the expandable tube 248. This, however, is not limiting. Other wick designs are contemplated by the present disclosure such as, for example, wicks with a cross-section in the form of pentagon, hexagon, heptagon, octagon, or any suitable polygon. In such embodiments, geometrically suitable expandable enclosures and support enclosures can be utilized.

As shown in FIG. 9, the length of the sheet of wick mesh 204 is configured to be cut shorter than the length of the expandable tube 248 such that an uncaptured zone 208 is defined between an end of the sheet of wick mesh 204 and an end of the expandable tube 248. Other embodiments are envisioned where the wick mesh 204 is not cut short such that the length of the expandable tube 248 and the wick mesh 204 are the same, or at least substantially the same.

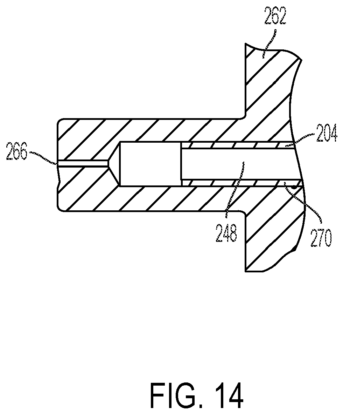

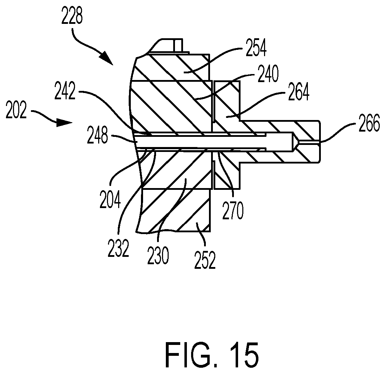

Referring again to FIGS 6 and 7, the forming assembly 202 can further can include a forming shell assembly 228. The forming shell assembly 228 includes a lower, or first, forming shell 230 and an upper, or second, forming shell 240. Each of the first and second forming shells 230, 240 can be fabricated out of any suitable solid material, such as stainless steel, as an example. In one embodiment, the forming shells 230, 240 can be fabricated out of the same material as the wick mesh 204 material. Each of the first and second forming shells 230, 240 include a cavity, or recess, 232, 242 defined therein that extends along the length thereof. The recesses 232, 242 of the forming shells 230, 240 are configured to be complementary such that, when the first and second forming shells 230, 240 are brought into abutting contact, the recesses 232, 242 cooperate to define a receiving area, seen in FIGS. 14 and 15, that is configured to receive the rolled wick mesh 204. The recesses 232, 242 are sized such that, when brought into abutting contact, a gap is defined between the wick mesh 204 and each of the recesses 232, 242.

The recesses 232, 242 of the first and second forming shells 230, 240 are configured to provide a solid surface and a boundary of maximum deformation to the sheet(s) of wick mesh 204. The recesses 232, 242 are configured to act on the sheet(s) of wick mesh 204 rolled about the expandable tube 248 as the expandable tube 248 hydraulically expands to the expanded configuration. The recesses 232, 242 are configured to define an outer diameter and final shape of the wick. In one embodiment, the recesses 232, 242 comprise partially-circular cross-sectional shapes, as shown in FIGS. 4 and 5, as an example, with a radius of curvature such that, when the first and second forming shells 230, 240 are brought into abutting contact, the partially-circular shaped recesses 232, 242 form a circular shape throughout the length of the forming shell assembly 228. Other embodiments are envisioned where the recesses 232, 242 of each forming shell 230, 240 comprise other complementary shapes, such that, when the first and second forming shells 230, 240 are brought into abutting contact, the recess 232, 242 cooperate to form other shapes, such as an oval, a square, or any other symmetrical shape that is desired of the wick. Other examples are envisioned where the recesses 232, 242 of each forming shell 230, 240 are dissimilar relative to the other such that, when the first and second forming shells 230, 240 are brought into abutting contact, non-symmetrically shaped wicks can be formed. The recesses 232, 242 can be shaped such that any desired wick shape is possible.

Referring again to FIG. 7, the forming shell assembly 228 can further include a first end flange 262 and a second end flange 264. The first end flange 262 and the second end flange 264 are configured to be fastened to the ends of the first forming shell 230 and second forming shell 240 by a plurality of fasteners 272. In one embodiment, the fasteners 272 can comprise bolts configured to be threadably received in threaded apertures defined in the first and second forming shells 230, 240. While fasteners 272 are shown and described, other suitable methods are envisioned for coupling the end flanges 262, 264 to the first and second forming shells 230, 240, such as with a latch mechanism, an adhesive, or clamps, as examples.

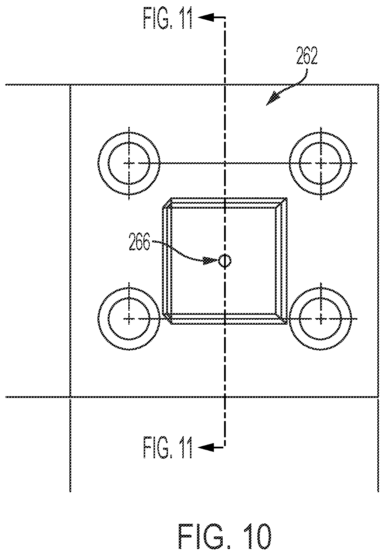

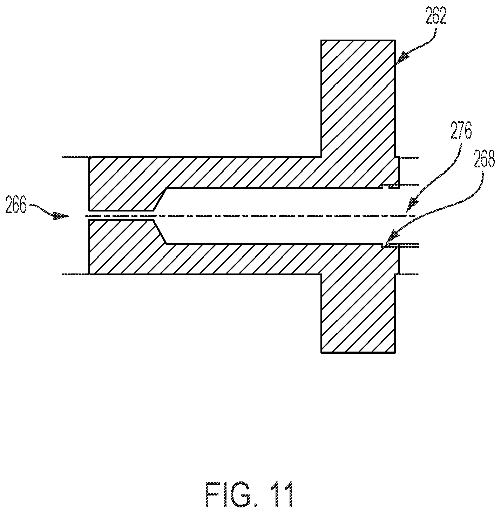

As shown in FIGS. 10, 11 and 14, the first end flange 262 includes a wick assembly receiving area 276, a groove 268 extending about the wick assembly receiving area 276, and a hydraulic opening 266. As discussed above, the length of the sheet of wick mesh 204 is configured to be cut shorter than the length of the expandable tube 248 such that an uncaptured zone 208 is defined between an end of the sheet of wick mesh 204 and an end of the expandable tube 248. A portion of the uncaptured zone 208 is configured to be received by the wick assembly receiving area 276 of the first end flange 262. In addition, an o-ring 270 is configured to be positioned in the groove 268 such that the o-ring 270 is positioned about the portion of the uncaptured zone 208. The combination of the uncaptured zone 208 and the o-ring 270 within the wick assembly receiving area 276 creates a seal within the forming shell assembly 228. The second end flange 264, as shown in FIGS. 15, is substantially similar to the first end flange 262. Other embodiments are envisioned wherein only one of either the first end flange 262 or the second end flange 264 include a hydraulic opening 266.

The hydraulic opening 266 of the first and second end flange 262, 264 is configured to interact with a source of hydraulic pressure, such as a water source, an air source, or any other suitable source of hydraulic pressure. The source of hydraulic pressure is configured to apply pressure to the expandable tube 248 by way of the hydraulic opening 266, causing the expandable tube 248 to transition towards the expanded configuration.

As mentioned above, a portion of the uncaptured zone 208 of the wick forming assembly 202 is configured to be inserted through the wick assembly receiving areas 276 and o-rings 270 of the first and second end flanges 262, 264, creating a seal. The seal allows internal pressurization of the expandable tube 248 via the source of hydraulic pressure. The seals also prevent fluid from escaping or leaking from the forming shell assembly 228, as well as prevents the hydraulic fluid from coming into contact with the wick mesh 204 about the expandable tube 248. In addition, as discussed above, the length of the sheet of wick mesh 204 is configured to be cut shorter than the length of the expandable tube 248, preventing the wick mesh 204 from expanding into the non-uniform surfaces of the first and second end flanges 262, 264, such as the wick assembly receiving areas 276 or the grooves 268.

Referring again to FIGS. 6 and 7, the forming assembly 202 can comprise a pressure plate assembly 250. The pressure plate assembly 250 can include a first pressure plate 252 and a second pressure plate 254. The first pressure plate 252 is configured to abut the first forming shell 230, the first end flange 262, and the second end flange 264. The second pressure plate 254 is configured to abut the second forming shell 240, the first end flange 262, and the second end flange 264. Other embodiments are envisioned where the pressure plates 252, 254 only contact the forming shells 230, 240 and not contact the end flanges 262, 264. A plurality of fasteners 256 can be configured to fasten the first pressure plate 252 to the second pressure plate 254. The pressure plate assembly 250 can be modified in dimension to accommodate any number of forming shell assemblies.

The pressure plate assembly 250 is configured to apply a preloaded pressure to the forming shell assembly 228 such that, when the source of pressure hydraulically expands the expandable tube 248 and the wick mesh 204 into abutting contact with the recesses 232, 242 of the forming shells 230, 240, the forming shells 230, 240 remain compressed with no separation therebetween. In one embodiment, the plurality of fasteners 256 can comprises bolts, nuts, and washers, as shown in FIG. 7. Other means for preventing the first forming shell 230 and the second forming shell 240 from separating are contemplated by the present disclosure in lieu of the pressure plate assembly 250, such as a latch assembly, a plurality of clamps, or any other suitable means for preventing the first forming shell 230 and the second forming shell 240 from separating during pressurization of the expandable tube 248.

The pressure plate assembly 250 is configured to provide additional structural rigidity to the forming shell assembly 228 to minimize deformation throughout pressurization of the expandable tube 248. The plurality of fasteners 256 along the length of the pressure plate assembly 250 can be configured to center the forming shell assembly 228 within the pressure plate assembly 250. In one embodiment, the pressure plate assembly 250 could include a groove which acts as a centering mechanism for the forming shell assembly 228. The first and second pressure plate 252, 254 thickness and overall dimensions can be modified such as to permit higher internal forming pressures experienced by the expandable tube 248.

The in-situ rolling and forming assembly 200 is designed with features that allow for easy and convenient assembly/disassembly. To disassemble the in-situ rolling and forming assembly 200 after the wick 108 has been formed and the forming assembly 202 had been depressurized, the fasteners 256 of the pressure plate assembly 250 are loosed or removed, allowing the forming shell assembly 228 to be pushed out from between the pressure plates 252, 254. The second pressure plate 254 contains hooks 274 to assist in the placement and removal of the second pressure plate 254, thereby allowing easier access to the forming shell assembly 228. The first and second end flanges 262, 264 are then removed by removing the associated fasteners 272. The o-ring 270 design allows for the flanges 262, 264 to slip off of the uncaptured zone 208 of the expandable tube 248. As discussed above, the wick mesh 204 remains deformed after the forming process, allowing for the expandable tube 248 to transition towards the unexpanded configuration and separate away from the wick 108. With a space between the expandable tube 248 and wick 108, the expandable tube 248 can be easily removed. The top and bottom forming shells 230, 240 can then be separated and the wick 108 can be removed.

The forming assembly and associated steps described above produce a wick which, after diffusion bonded, has been tested and proven to contain the proper dimensions (outside diameter, thickness), tolerances (approximately ±0.001 inch diameter), pore size and strength required to be utilized in a heat pipe. The forming assembly and associated steps has also been proven to be highly repeatable through multiple trials.

In one embodiment, the in-situ rolling and forming assembly 200 can be configured to produce one foot long wick at a specified diameter and thickness (based on predefined dimensions of the recesses 232, 242 and the selected number of layers of wick mesh 204). The in-situ rolling and forming assembly 200 design may be used to produce a continuous assembly to produce different lengths (as detailed herein) or be slightly modified to be assembled in sections. The length, diameter, and thickness of any formed wick 108 is possible utilizing the above-described forming assembly and by modifying the dimensions of the recesses 232, 242, the length of the forming shell assembly 228, and the number of layers of wick mesh 204.

Since the final wick outside diameter is determined by the forming shell recesses, the dimension and shape of the recesses can be modified to produce a formed wick of varying dimensions and shapes, as discussed above.

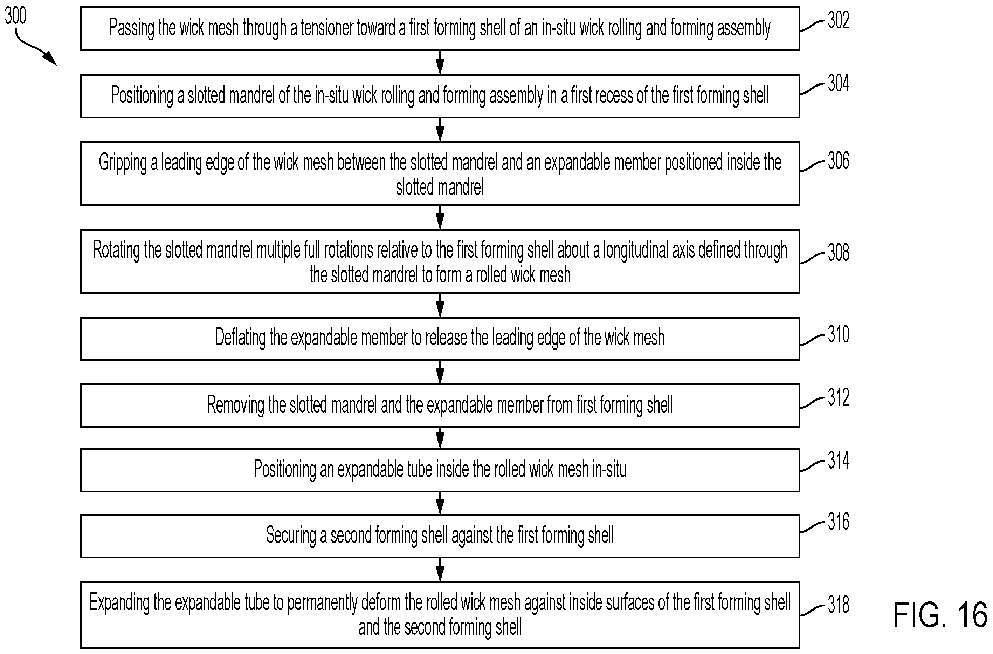

Referring now to FIG. 16, a method 300 for in-situ wick rolling and forming a wick for a heat pipe from a wick mesh is illustrated, in accordance with at least one aspect of the present disclosure. In various aspects, one or more aspects of the method 300 can be implemented using one or more of the devices, systems of the present disclosure. The method 300 includes passing 302 a wick mesh through a tensioner toward a first forming shell of an in-situ wick rolling and forming assembly, positioning 304 a slotted mandrel of the in-situ wick rolling and forming assembly in a first recess of the first forming shell, gripping 306 a leading edge of the wick mesh between the slotted mandrel and an expandable member positioned inside the slotted mandrel, rotating 308 the slotted mandrel multiple full rotations relative to the first forming shell about a longitudinal axis defined through the slotted mandrel to form a rolled wick mesh, deflating 310 the expandable member to release the leading edge of the wick mesh, removing 312 the slotted mandrel and the expandable member from first forming shell, positioning 314 an expandable tube inside the rolled wick mesh in-situ, securing 316 a second forming shell against the first forming shell, and expanding 318 the expandable tube to permanently deform the rolled wick mesh against inside surfaces of the first forming shell and the second forming shell.

In certain aspects, the slotted mandrel and/or the expandable member are removed from the first forming shell by withdrawing without disturbing the rolled wick mesh. The slotted mandrel and or the expandable member can be pulled away while the wick mesh is maintained on a recess of the first forming shell. In certain aspects, the expandable tube is positioned inside the rolled wick mesh in-situ by sliding the expandable tube through a side the opening of the rolled wick mesh.

Further to the above, in certain exemplifications, a method (e.g. method 300) includes inflating the expandable tube using pressurized fluid that forcefully pushes the wick mesh material outward until contacted by a hydroforming upper and lower captive dies causing compression and eventual permanent deformation of the wick mesh material. In certain instances, a method (e.g. method 300) includes producing a permanently deformed cylindrical wick containing an outside diameter consistent with the inside diameter of the hydroforming upper and lower captive dies and a thickness determined by the number of wire mesh layers. In certain aspects, a method (e.g. method 300) includes producing a permanently deformed cylindrical wick containing uniform pore sizes as confirmed by bubble tests.

In certain aspects, a method (e.g. method 300) includes separates the expandable tube away from the permanently deformed mesh after being depressurized allowing for manual removal of the expandable tube from the hydroformed wick without causing damage to the hydroformed wick. The hydroformed wick is suitable for diffusion bonding at high temperatures (>900⁰C) that does not require fixturing to hold and secure in place during diffusion bonding.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. It is intended that the claims submitted herewith define the overall scope.

## Claims

1. An in-situ wick rolling and forming assembly (201) configured to roll and form a wick (108) for a heat pipe from a wick mesh (204), the in-situ wick rolling and forming assembly comprising:
a slotted mandrel (210) comprising:
a first end (218);
a second end (218);
an elongate body intermediate the first end (218) and the second end (218), the elongate body defining a longitudinal axis; and
a slot (214) extending along the longitudinal axis, wherein the slot (214) is configured to receive a leading edge of the wick mesh (204);
**characterized in that** the in-situ wick rolling and forming assembly (201) further comprises:
a first forming shell (230) configured to form the wick in-situ after the rolling of the wick mesh (204), the first forming shell (230) comprising:
a first recess (232) in which the slotted mandrel (210) is removably positionable; and
a first parting surface (234), wherein a first central axis (236) of the first recess (232) is positioned below the first parting surface (234); and
an expandable member (222), fluidically expandable to an expanded configuration, wherein the expandable member (222) is removably positionable inside the slotted mandrel (210), and wherein the expandable member (222) is configured to contact the leading edge of the wick mesh (204) in the expanded configuration such that the leading edge of the wick mesh (204) is gripped between the slotted mandrel (210) and the expandable member (222), wherein the slotted mandrel (210) is rotatable about the longitudinal axis relative to the first recess (232) to wrap the wick mesh (204) around an outer surface of the slotted mandrel (210).

2. The in-situ wick rolling and forming assembly of Claim 1, further comprising a second forming shell (240) positionable against the first forming shell (230) after the rolling of the wick mesh (204) to form the wick in-situ, wherein the second forming shell (240) comprises:
a second recess (242); and
a second parting surface (244), wherein a second central axis (246) of the second recess (242) is positioned above the second parting surface (244).

3. The in-situ wick rolling and forming assembly of Claim 2, wherein the first recess (232) comprises a first arc length, wherein second recess (242) comprises a second arc length, and wherein the first arc length is greater than the second arc length.

4. The in-situ wick rolling and forming assembly of Claim 2, comprises a hydroforming die assembly that includes the first forming shell (230) and the second forming shell (240).

5. The in-situ wick rolling and forming assembly of Claim 2, wherein the first forming shell (230) and the second forming shell (240) cooperatively define an outer diameter of the wick when assembled together for the forming of the wick.

6. The in-situ wick rolling and forming assembly of Claim 1, further comprising a tensioner (400) spaced apart from the first forming shell (230), wherein the wick mesh (204) is passable through the tensioner (400) to the slotted mandrel (210) while the slotted mandrel (210) is in the first recess (232) of the first forming shell (230).

7. The in-situ wick rolling and forming assembly of Claim 6, wherein the tensioner (400) comprises:
a roller (403); and
a bridge (404) configured to be raised and lowered to insert the wick mesh (204) between the roller (403) and the bridge (404).

8. The in-situ wick rolling and forming assembly of Claim 7, wherein the bridge (404) comprises tension members (402) configured to maintain a constant force on the roller (403).

9. The in-situ wick rolling and forming assembly of Claim 8, wherein the tension members (402) are spring-biased toward the roller (403).

10. The in-situ wick rolling and forming assembly of Claim 6, wherein the tensioner (400) comprises a support structure made from t-slot extruded aluminum with a bridge (404).

11. The in-situ wick rolling and forming assembly of Claim 4, wherein the hydroforming die assembly is configured to form the wick by permanently deforming the rolled wick mesh (204) into a cylindrical structure comprising an outer diameter consistent with an inside diameter of the hydroforming die assembly defined by the first forming shell (230) and the second forming shell (240) while in an assembled configuration after the rolling.

12. The in-situ wick rolling and forming assembly of Claim 4, wherein the hydroforming die assembly comprises an expandable tube (248) positionable inside the rolled wick mesh (204) after the rolling, and wherein the expandable tube is configured to form the wick by permanently deforming the rolled wick mesh (204) against an inside surface of the hydroforming die assembly defined by the first forming shell (230) and the second forming shell (240) while in an assembled configuration after the rolling.

13. The in-situ wick rolling and forming assembly of Claim 4, wherein the expandable member (222) is an expandable bladder.

14. The in-situ wick rolling and forming assembly of Claim 2, wherein the first parting surface (234) is angled upwardly away from the first recess (232) and the second parting surface (244) is angled downwardly away from the second recess (242).

15. A method for in-situ wick rolling and forming a wick for a heat pipe from a wick mesh (204), **characterized in that** the method comprises:
passing the wick mesh (204) through a tensioner (400) toward a first forming shell (230) of an in-situ wick rolling and forming assembly (201);
positioning a slotted mandrel (210) of the in-situ wick rolling and forming assembly (201) in a first recess (232) of the first forming shell (230);
gripping a leading edge of the wick mesh (204) between the slotted mandrel (210) and an expandable member (222) positioned inside the slotted mandrel (210);
rotating the slotted mandrel (210) multiple full rotations relative to the first forming shell (230) about a longitudinal axis defined through the slotted mandrel (210) to form a rolled wick mesh;
deflating the expandable member (222) to release the leading edge of the wick mesh (204);
removing the slotted mandrel (210) and the expandable member (222) from first forming shell (230);
positioning an expandable tube (248) inside the rolled wick mesh in-situ;
securing a second forming shell (240) against the first forming shell (230);
expanding the expandable tube (248) to permanently deform the rolled wick mesh against inside surfaces of the first forming shell (230) and the second forming shell (240).

## Patentansprüche

1. Anordnung zum In-situ-Walzen und -Formen von Dochten (201), die konfiguriert ist, um einen Docht (108) für ein Wärmerohr aus einem Dochtgeflecht (204) zu walzen und zu formen, die Anordnung zum In-situ-Walzen und -Formen von Dochten umfassend:
einen geschlitzten Dorn (210), umfassend:
ein erstes Ende (218);
ein zweites Ende (218);
einen länglichen Körper zwischen dem ersten Ende (218) und dem zweiten Ende (218), wobei der längliche Körper eine Längsachse definiert; und
einen Schlitz (214), der sich entlang der Längsachse erstreckt, wobei der Schlitz (214) konfiguriert ist, um eine Vorderkante des Dochtgeflechts (204) aufzunehmen;
**dadurch gekennzeichnet, dass** die Anordnung zum In-situ-Walzen und - Formen von Dochten (201) ferner umfasst:
eine erste Formschale (230), die konfiguriert ist, um den Docht nach dem Walzen des Dochtgeflechts (204) in situ zu formen, wobei die erste Formschale (230) umfasst:
eine erste Aussparung (232), in der der geschlitzte Dorn (210) entfernbar positionierbar ist; und
eine erste Trennoberfläche (234), wobei eine erste zentrale Achse (236) der ersten Aussparung (232) unterhalb der ersten Trennoberfläche (234) positioniert ist; und
ein expandierbares Element (222), das fluidisch in eine expandierte Konfiguration expandierbar ist, wobei das expandierbare Element (222) entfernbar im Inneren des geschlitzten Dorns (210) positionierbar ist, und wobei das expandierbare Element (222) konfiguriert ist, um die Vorderkante des Dochtgeflechts (204) in der expandierten Konfiguration derart zu kontaktieren, dass die Vorderkante des Dochtgeflechts (204) zwischen dem geschlitzten Dorn (210) und dem expandierbaren Element (222) festgehalten wird, wobei der geschlitzte Dorn (210) um die Längsachse relativ zu der ersten Aussparung (232) drehbar ist, um das Dochtgeflecht (204) um eine Außenoberfläche des geschlitzten Dorns (210) zu wickeln.

2. Anordnung zum In-situ-Walzen und -Formen von Dochten nach Anspruch 1, ferner umfassend eine zweite Formschale (240), die nach dem Walzen des Dochtgeflechts (204) gegen die erste Formschale (230) positionierbar ist, um den Docht in situ zu formen, wobei die zweite Formschale (240) umfasst:
eine zweite Aussparung (242); und
eine zweite Trennoberfläche (244), wobei eine zweite zentrale Achse (246) der zweiten Aussparung (242) oberhalb der zweiten Trennoberfläche (244) positioniert ist.

3. Anordnung zum In-situ-Walzen und -Formen von Dochten nach Anspruch 2, wobei die erste Aussparung (232) eine erste Bogenlänge umfasst, wobei die zweite Aussparung (242) eine zweite Bogenlänge umfasst, und wobei die erste Bogenlänge größer als die zweite Bogenlänge ist.

4. Anordnung zum In-situ-Walzen und -Formen von Dochten nach Anspruch 2, umfassend eine Hydroforming-Werkzeuganordnung, die die erste Formschale (230) und die zweite Formschale (240) einschließt.

5. Anordnung zum In-situ-Walzen und -Formen von Dochten nach Anspruch 2, wobei die erste Formschale (230) und die zweite Formschale (240) zusammenwirkend einen Außendurchmesser des Dochtes definieren, wenn sie zum Formen des Dochtes zusammengebaut sind.

6. Anordnung zum In-situ-Walzen und -Formen von Dochten nach Anspruch 1, ferner umfassend eine Spannvorrichtung (400), die von der ersten Formschale (230) beabstandet ist, wobei das Dochtgeflecht (204) durch die Spannvorrichtung (400) zu dem geschlitzten Dorn (210) hindurchführbar ist, während sich der geschlitzte Dorn (210) in der ersten Aussparung (232) der ersten Formschale (230) befindet.

7. Anordnung zum In-situ-Walzen und -Formen von Dochten nach Anspruch 6, wobei die Spannvorrichtung (400) umfasst:
eine Walze (403); und
eine Brücke (404), die konfiguriert ist, um angehoben und abgesenkt zu werden, um das Dochtgeflecht (204) zwischen die Walze (403) und die Brücke (404) einzuführen.

8. Anordnung zum In-situ-Walzen und -Formen von Dochten nach Anspruch 7, wobei die Brücke (404) Spannelemente (402) umfasst, die konfiguriert sind, um eine konstante Kraft auf die Walze (403) beizubehalten.

9. Anordnung zum In-situ-Walzen und -Formen von Dochten nach Anspruch 8, wobei die Spannelemente (402) in Richtung der Walze (403) federvorgespannt sind.

10. Anordnung zum In-situ-Walzen und -Formen von Dochten nach Anspruch 6, wobei die Spannvorrichtung (400) eine aus extrudiertem T-Nut-Aluminium hergestellte Stützstruktur mit einer Brücke (404) umfasst.

11. Anordnung zum In-situ-Walzen und -Formen von Dochten nach Anspruch 4, wobei die Hydroforming-Werkzeuganordnung konfiguriert ist, um den Docht durch dauerhaftes Verformen des gewalzten Dochtgeflechts (204) in eine zylindrische Struktur zu formen, umfassend einen Außendurchmesser in Übereinstimmung mit einem Innendurchmesser der Hydroforming-Werkzeuganordnung, der durch die erste Formschale (230) und die zweite Formschale (240) definiert ist, während sie sich nach dem Walzen in einer zusammengebauten Konfiguration befindet.

12. Anordnung zum In-situ-Walzen und -Formen von Dochten nach Anspruch 4, wobei die Hydroforming-Werkzeuganordnung ein expandierbares Rohr (248) umfasst, das nach dem Walzen innerhalb des gewalzten Dochtgeflechts (204) positionierbar ist, und wobei das expandierbare Rohr konfiguriert ist, um den Docht durch dauerhaftes Verformen des gewalzten Dochtgeflechts (204) gegen eine innere Oberfläche der Hydroforming-Werkzeuganordnung zu formen, die durch die erste Formschale (230) und die zweite Formschale (240) definiert ist, während sie sich nach dem Walzen in einer zusammengebauten Konfiguration befindet.

13. Anordnung zum In-situ-Walzen und -Formen von Dochten nach Anspruch 4, wobei das expandierbare Element (222) eine expandierbare Blase ist.

14. Anordnung zum In-situ-Walzen und -Formen von Dochten nach Anspruch 2, wobei die erste Trennoberfläche (234) von der ersten Aussparung (232) weg nach oben schräg verlaufend ist und die zweite Trennoberfläche (244) von der zweiten Aussparung (242) weg nach unten schräg verlaufend ist.

15. Verfahren zum In-situ-Walzen und -Formen eines Dochtes für ein Wärmerohr aus einem Dochtgeflecht (204), **dadurch gekennzeichnet, dass** das Verfahren umfasst:
Führen des Dochtgeflechts (204) durch eine Spannvorrichtung (400) in Richtung einer ersten Formschale (230) einer Anordnung zum In-situ-Walzen und -Formen von Dochten (201);
Positionieren eines geschlitzten Dorns (210) der Anordnung zum In-situ-Walzen und -Formen von Dochten (201) in einer ersten Aussparung (232) der ersten Formschale (230);
Greifen einer Vorderkante des Dochtgeflechts (204) zwischen dem geschlitzten Dorn (210) und einem expandierbaren Element (222), das innerhalb des geschlitzten Dorns (210) positioniert ist;
Drehen des geschlitzten Dorns (210) um mehrere volle Umdrehungen relativ zu der ersten Formschale (230) um eine durch den geschlitzten Dorn (210) definierte Längsachse, um ein gewalztes Dochtgeflecht zu formen;
Entleeren des expandierbaren Elements (222), um die Vorderkante des Dochtgeflechts (204) freizugeben;
Entfernen des geschlitzten Dorns (210) und des expandierbaren Elements (222) aus der ersten Formschale (230);
Positionieren eines expandierbaren Rohrs (248) innerhalb des gewalzten Dochtgeflechts in situ;
Befestigen einer zweiten Formschale (240) an der ersten Formschale (230);
Expandieren des expandierbaren Rohrs (248), um das gewalzte Dochtgeflecht gegen innere Oberflächen der ersten Formschale (230) und der zweiten Formschale (240) dauerhaft zu verformen.

## Revendications

1. Ensemble de laminage et de formage de mèche in situ (201) conçu pour laminer et former une mèche (108) pour un caloduc à partir d'un maillage de mèche (204), l'ensemble de laminage et de formage de mèche in situ comprenant :
un mandrin fendu (210) comprenant :
une première extrémité (218) ;
une seconde extrémité (218) ;
un corps allongé entre la première extrémité (218) et la seconde extrémité (218), le corps allongé définissant un axe longitudinal ; et
une fente (214) s'étendant le long de l'axe longitudinal, dans lequel la fente (214) est conçue pour recevoir un bord d'attaque du maillage de mèche (204) ;
**caractérisé en ce que** l'ensemble de laminage et de formage de mèche in situ (201) comprend en outre :
une première coque de formage (230) conçue pour former la mèche in situ après le laminage du maillage de mèche (204), la première coque de formage (230) comprenant :
un premier évidement (232) dans lequel le mandrin fendu (210) peut être positionné de manière amovible ; et
une première surface de séparation (234), dans lequel un premier axe central (236) du premier évidement (232) est positionné en dessous de la première surface de séparation (234) ; et
un élément extensible (222), fluidiquement extensible vers une configuration expansée, dans lequel l'élément extensible (222) peut être positionné de manière amovible à l'intérieur du mandrin fendu (210), et dans lequel l'élément extensible (222) est conçu pour entrer en contact avec le bord d'attaque du maillage de mèche (204) dans la configuration étendue de telle sorte que le bord d'attaque du maillage de mèche (204) est saisi entre le mandrin fendu (210) et l'élément extensible (222), dans lequel le mandrin fendu (210) peut tourner autour de l'axe longitudinal par rapport au premier évidement (232) pour enrouler le maillage de mèche (204) autour d'une surface externe du mandrin fendu (210).

2. Ensemble de laminage et de formage de mèche in situ selon la revendication 1, comprenant en outre une seconde coque de formage (240) positionnable contre la première coque de formage (230) après le laminage du maillage de mèche (204) pour former la mèche in situ, dans lequel la seconde coque de formage (240) comprend :
un second évidement (242) ; et
une seconde surface de séparation (244), dans lequel un second axe central (246) du second évidement (242) est positionné au-dessus de la seconde surface de séparation (244).

3. Ensemble de laminage et de formage de mèche in situ selon la revendication 2, dans lequel le premier évidement (232) comprend une première longueur d'arc, dans lequel le second évidement (242) comprend une seconde longueur d'arc, et dans lequel la première longueur d'arc est supérieure à la seconde longueur d'arc.

4. Ensemble de laminage et de formage de mèche in situ selon la revendication 2, comprenant un ensemble matrice d'hydroformage qui comporte la première coque de formage (230) et la seconde coque de formage (240).

5. Ensemble de laminage et de formage de mèche in situ selon la revendication 2, dans lequel la première coque de formage (230) et la seconde coque de formage (240) définissent de manière coopérative un diamètre externe de la mèche lorsqu'elles sont assemblées ensemble pour la formation de la mèche.

6. Ensemble de laminage et de formage de mèche in situ selon la revendication 1, comprenant en outre un tendeur (400) espacé de la première coque de formage (230), dans lequel le maillage de mèche (204) peut passer à travers le tendeur (400) jusqu'au mandrin fendu (210), tandis que le mandrin fendu (210) se trouve dans le premier évidement (232) de la première coque de formage (230).

7. Ensemble de laminage et de formage de mèche in situ selon la revendication 6, dans lequel le tendeur (400) comprend :
un dispositif de laminage (403) ; et
un pont (404) conçu pour être levé et abaissé afin d'insérer le maillage de mèche (204) entre le dispositif de laminage (403) et le pont (404).

8. Ensemble de laminage et de formage de mèche in situ selon la revendication 7, dans lequel le pont (404) comprend des éléments de tension (402) conçus pour maintenir une force constante sur le dispositif de laminage (403).

9. Ensemble de laminage et de formage de mèche in situ selon la revendication 8, dans lequel les éléments de tension (402) sont sollicités par ressort vers le dispositif de laminage (403).

10. Ensemble de laminage et de formage de mèche in situ selon la revendication 6, dans lequel le tendeur (400) comprend une structure de support en aluminium extrudé à fente en T avec un pont (404).

11. Ensemble de laminage et de formage de mèche in situ selon la revendication 4, dans lequel l'ensemble matrice d'hydroformage est conçu pour former la mèche en laminant de manière permanente le maillage de mèche laminé (204) en une structure cylindrique comprenant un diamètre externe correspondant à un diamètre intérieur de l'ensemble matrice d'hydroformage défini par la première coque de formage (230) et la seconde coque de formage (240) dans une configuration assemblée après le laminage.

12. Ensemble de laminage et de formage de mèche in situ selon la revendication 4, dans lequel l'ensemble matrice d'hydroformage comprend un tube expansible (248) positionnable à l'intérieur du maillage de mèche laminé (204) après le laminage, et dans lequel le tube expansible est conçu pour former la mèche en déformant de manière permanente le maillage de mèche laminé (204) contre une surface intérieure de l'ensemble matrice d'hydroformage défini par la première coque de formage (230) et la seconde coque de formage (240) dans une configuration assemblée après le laminage.

13. Ensemble de laminage et de formage de mèche in situ selon la revendication 4, dans lequel l'élément expansible (222) est une vessie expansible.

14. Ensemble de laminage et de formage de mèche in situ selon la revendication 2, dans lequel la première surface de séparation (234) est inclinée vers le haut à l'écart du premier évidement (232) et la seconde surface de séparation (244) est inclinée vers le bas à l'écart du second évidement (242).

15. Procédé de laminage de mèche in situ et de formation d'une mèche pour un caloduc à partir d'un maillage de mèche (204), **caractérisé en ce que** le procédé comprend :
le passage du maillage de mèche (204) à travers un tendeur (400) vers une première coque de formage (230) d'un ensemble de laminage et de formage de mèche in situ (201) ;
le positionnement d'un mandrin fendu (210) de l'ensemble de laminage et de formage de mèche in situ (201) dans un premier évidement (232) de la première coque de formage (230) ;
la saisie d'un bord d'attaque du maillage de mèche (204) entre le mandrin fendu (210) et un élément extensible (222) positionné à l'intérieur du mandrin fendu (210) ;
la rotation du mandrin fendu (210) de plusieurs tours complets par rapport à la première coque de formage (230) autour d'un axe longitudinal défini à travers le mandrin fendu (210) pour former un maillage de mèche laminé ;
le dégonflage de l'élément extensible (222) pour libérer le bord d'attaque du maillage de mèche (204) ;
le retrait du mandrin fendu (210) et de l'élément extensible (222) de la première coque de formage (230) ;
le positionnement d'un tube expansible (248) à l'intérieur du maillage de mèche laminé in situ ;
la fixation d'une seconde coque de formage (240) contre la première coque de formage (230) ;
l'expansion du tube expansible (248) pour déformer de manière permanente le maillage de mèche laminé contre des surfaces intérieures de la première coque de formage (230) et de la seconde coque de formage (240).
